(19) Europäisches Patentamt
European Patent Office
Office européen des brevets

(11) EP 1 604 574 B1

(12) # EUROPEAN PATENT SPECIFICATION

(45) Date of publication and mention of the grant of the patent:
**22.12.2010 Bulletin 2010/51**

(51) Int Cl.:
*A23J 3/16* (2006.01) *A23J 3/34* (2006.01)
*A23G 3/00* (2006.01) *A23L 1/305* (2006.01)

(21) Application number: **04253061.8**

(22) Date of filing: **25.05.2004**

(54) **Soy protein blend for soft confectionery food bars**

Soja-Protein Mischung für weiche Süsswaren-Riegel

Mélange de protéines de soja pour barres de confiserie molles

(84) Designated Contracting States:
**AT BE BG CH CY CZ DE DK EE ES FI FR GB GR HU IE IT LI LU MC NL PL PT RO SE SI SK TR**

(43) Date of publication of application:
**14.12.2005 Bulletin 2005/50**

(73) Proprietor: **Solae, LLC**
**St. Louis, MO 63110 (US)**

(72) Inventors:
- **Taillie, Steven A.**
**St. Louis 63108**
**Missouri (US)**
- **Cho, Myong J.**
**Chesterfield 63017**
**Missouri (US)**

(74) Representative: **Hirsch & Associés**
**58, avenue Marceau**
**75008 Paris (FR)**

(56) References cited:
**EP-A- 0 148 600**
**US-A- 4 563 357**
**US-A1- 2002 114 877**
**US-A1- 2003 054 087**
**US-A1- 2003 054 088**
**US-A1- 2003 215 559**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 604 574 B1

## Description

### Field of the Invention

The present invention relates to confectionary food bars, and particularly to soy protein containing soft confectionary food bars having a long shelf-life.

### Background of the Invention

Confectionary food bars have become a popular consumer choice for a variety of reasons. One reason for their popularity is that food bars are frequently used as a nutrition source for people "on the go" who don't have time for a meal. Another reason is that high protein food bars are used by athletes to enhance athletic performance and to help build body mass. Furthermore, dieters often use food bars as low calorie "meal replacers" in weight loss programs. As a result, the food bar industry has grown tremendously in the past ten years.

Confectionary food bars are also utilized to obtain health benefits, such as lower total blood cholesterol concentrations. Confectionary food bars are typically formulated to contain protein, carbohydrates, and flavorings. The U.S. Food and Drug Administration has recognized soy protein as useful for lowering blood cholesterol concentrations, therefore, soy protein is utilized as a preferred protein material in food bars to formulate health promoting food bars. Health promoting food bars must include relatively high levels of soy protein in the food bar formulation in order to be useful as "health promoting". Typical health promoting food bars contain from 20% to 45% soy protein, by weight.

Inclusion of high levels of protein in a food bar, however, negatively affects the texture, palatability, and shelf-life of the food bar relative to food bars containing less protein and more carbohydrates. High protein levels, e.g. 20% to 45% by weight, in a food bar cause the bar to become texturally hard and bricklike. As a result, the food bar is unpalatable to a consumer since it is hard to chew.

U.S. Patent No. 6,299,929 discloses bars which partially overcome the disadvantages of confectionary food bars containing high levels of protein. These bars utilize a proteinaceous material having low water absorption properties and medium to high emulsification properties in combination with a carbohydrate material to form chewy food bars having a protein to carbohydrate weight ratio of greater than 1. The critical feature of the proteinaceous material that provides the desired chewiness is a dissociation between water hydration properties of the proteinaceous material and other functional characteristics of the proteinaceous material. The proteinaceous material used in the food bars is preferably a mixture of "binding" proteins having low water absorption, medium to high emulsification properties, and low to medium viscosity and denatured "filler" proteins having low functionality, in particular, low water absorption and low viscosity. The limiting amounts of binding protein and filler protein relative to each other are 100% binding protein:0% filler protein to 100% filler protein:0% binding protein, where the relative amounts of each type of protein are selected on the basis of flavor, price, availability, and nutrition.

The same applies to US 2003/0054088.

It is desirable, however, to provide new soft and palatable confectionary food bars having high levels of protein. It is further desirable to provide such soft confectionary food bars where the food bars have an extended shelf life in which they maintain their softness over an extended period of time. Therefore, it is an object of the present invention to provide a novel soft confectionary food bar containing high levels of protein, where the novel high protein food bar has an extended shelf-life for maintaining its softness.

### Summary of the Invention

In one aspect, the present invention is a protein containing composition for use in confectionary food bars, as defined in appended claim 1. The protein containing composition contains a structural protein material and a binding protein material, where the binding protein material is dispersed in the structural protein material. The structural protein material contains at least 90% soy protein, by weight; has a soluble solids index of between 20% and 40%; and has a trinitrobenzene sulfonic acid index value of less than 35. The binding protein material contains at least 90% soy protein, by weight; has a soluble solids index of at least 70%; and has a soluble trinitrobenzene sulfonic acid index value of at least 75.

In another aspect, the present invention is a confectionary food bar, as defined in appended claim 7, containing a structural protein material, a binding protein material, and a carbohydrate, where the confectionary food bar contains from 20% to 45% soy protein, by weight. The structural protein material contains at least 90% soy protein, by weight; has a soluble solids index of between 20% and 40%; and has a trinitrobenzene sulfonic acid index value of less than 35. The binding protein material contains at least 90% soy protein, by weight; has a soluble solids index of at least 70%; and has a soluble trinitrobenzene sulfonic acid index value of at least 75. The carbohydrate is selected from at least one digestible carbohydrate, at least one indigestible carbohydrate, or a mixture thereof. Preferably the confectionary food bar has an initial mechanical hardness of from 100 g force to 750 g force, and the confectionary food bar has an increase in mechanical hardness of less than 200 g force for a period of 35 days from formulation of the food bar.

In a further aspect, the present invention is a method of producing a soft confectionary high protein food bar having a long shelf-life, as defined in appended claim 17. A structural protein material, a binding protein material, and a carbohydrate are mixed together to form a dough. The structural protein material contains at least 90% soy protein, by weight; has a soluble solids index of between 20% and 40%; and has a trinitrobenzene sulfonic acid index value of less than 35. The binding protein material contains at least 90% soy protein, by weight; has a soluble solids index of at least 70%; and has a soluble trinitrobenzene sulfonic acid index value of at least 75. The carbohydrate is selected from at least one digestible carbohydrate, at least one indigestible carbohydrate, or a mixture thereof. The dough is then sheeted and cut to form a confectionary bar having an initial mechanical hardness of less than 200 g force which has in increase in mechanical hardness of less than 200 g force for a period of 35 days from formation of the bar.

## Brief Description of the Drawings

Fig. 1 is a graph showing the relative hardness of a confectionary food bar containing 30% soy protein as a measure of the relative amounts of a binding soy protein and a structural soy protein material at the time of formation of the food bar and 35 days after formation of the food bar.

Fig. 2 is a graph showing the relative hardness of a confectionary food bar containing 30% soy protein as a measure of the relative amounts of a binding soy protein and a structural soy protein material at the time of formation of the food bar and 35 days after formation of the food bar, where the structural protein material has a relative large particle size.

## Detailed Description of the Invention

The present invention is the discovery that a blend of relatively unhydrolyzed soy protein material having moderate solubility in an aqueous medium in combination with a relatively highly hydrolyzed soy protein having relatively high solubility in an aqueous medium is effective to produce a softer, more palatable texture in a high protein confectionary food bar than either soy protein material alone. The present invention also includes the discovery that the blend of soy protein materials is very effective at maintaining the soft, palatable texture in a high protein confectionary food bar over an extended period of time so the food bar will have a long shelf-life. Surprisingly, the present inventors have found that the protein blend and particularly the structural protein material need not have a low water absorption capacity to form soft, palatable high protein confectionary food bars.

### Definitions

As used herein, the term "soluble solids index" (hereinafter "SSI") refers to the solubility of a soy protein material in an aqueous solution as measured according to the following formula:

$$SSI\ (\%) = \left(\frac{\text{Soluble Solids}}{\text{Total Solids}}\right) x100 .$$

Soluble Solids and Total Solids are determined as follows:

1. A sample of the protein material is obtained by accurately weighing out 12.5 g of protein material.
2. 487.5 g of deionized water is added to a quart blender jar.
3. 2 to 3 drops of defoamer (Dow Coming Antifoam B Emulsion, 1:1 dilution with water) is added to the deionized water in the blender jar.
4. The blender jar containing the water and defoamer is placed on a blender (Osterizer), and the blender stirring speed is adjusted to create a moderate vortex (about 14,000 rpm).
5. A timer is set for 90 seconds, and the protein sample is added to the water and defoamer over a period of 30 seconds while blending. Blending is continued for the remaining 60 seconds after addition of the protein sample (total blending time should be 90 seconds from the start of addition of the protein sample).
6. The resulting protein material sample/water/defoamer slurry is then transferred to a 500 ml beaker containing a magnetic stirring bar. The beaker is then covered with plastic wrap or aluminum foil.

7. The covered beaker containing the slurry is then placed on a stirring plate, and the slurry is stirred at moderate speed for a period of 30 minutes.

8. 200 g of the slurry is then transferred into a centrifuge tube. A second 200 g sample of the slurry is then transferred into a second centrifuge tube. The remaining portion of the slurry in the beaker is retained for measuring total solids.

9. The 2 centrifuge tube samples are then centrifuged at 500xg for 10 minutes (1500 rpm on an IEC Model K).

10. At least 50 ml of the supernatant is withdrawn from each centrifuge tube and placed in a plastic cup (one cup for each sample from each centrifuge tube, 2 total cups).

11. Soluble Solids is then determined by drying a 5 g sample of each supernatant at 130°C for 2 hours, measuring the weights of the dried samples, and averaging the weights of the dried samples.

12. Total Solids is determined by drying two 5 g samples of the slurry retained in the beaker, measuring the weights of the dried samples, and averaging the weights of the dried samples.

13. The Soluble Solids Index (SSI) is calculated from the Soluble Solids and Total Solids according to the formula above.

As used herein, the "trinitrobenzene sulfonic acid" test (hereinafter "TNBS") is used to provide a measure of the degree of hydrolysis of soy proteins. Primary amines occur in soy proteins as amino terminal groups and also as the amino group of lysyl residues. The process of hydrolysis cleaves the peptide chain structure of soy proteins creating one new amino terminal with each break in the chain. The intensity of color developed from a TNBS-amine reaction is proportional to the total number of amino terminal groups in a soy protein sample, and, therefore, is an indicator of the degree of hydrolysis of the protein in the sample. The TNBS value, as used herein, is defined according to the following formula: $10 \times F \times \frac{100}{P}$, where $As_{420}$ is the absorbance of a TNBS sample solution at 420 nm; $Ab_{420}$ is the absorbance of a TNBS reagent blank at 420 nm; F is the dilution factor; and P is the protein content of the sample by Kjeldahl or Kjel-Foss. The TNBS procedure used herein to measure the TNBS value is a simplified TNBS procedure relative to a similar analytical procedure to measure TNBS where the protein content is measured using a Biruet solution—and this procedure should not be confused with the TNBS procedure which utilizes a Biruet solution to measure protein content since the Biruet procedure produces inflated TNBS values for highly hydrolyzed soy proteins.

In the simplified TNBS procedure $As_{420}$, $Ab_{420}$, F, and P values are determined as follows:

1. A 0.3M TNBS solution is prepared by mixing 0.5 g of TNBS*$5H_2O$ in 5 ml of deionized water.

2. A sodium borate buffer is prepared by dissolving 19.07 g $Na_2B_4O_7$* $10H_2O$ in 800 ml of deionized water; adjusting the pH of the resulting solution to 9.5 with 1N NaOH; and diluting the solution to 1000 ml.

3. A phosphate-sulfite solution is prepared by mixing 1.0 ml of a 0.1M sodium sulfite solution (0.189 g $Na_2SO_3$ diluted to 10 ml volume with deionized water) with 99 ml of a 0.1M sodium phosphate solution (13.8 g $NaH_2PO_4$*$H_2O$ diluted to 1000 ml volume with deionized water).

4. 3 samples of 0.1g of the highly hydrolyzed protein material are separately mixed with 100 ml of 0.025N NaOH and stirred for 10 minutes to dissolve the protein in the solution.

5. Each sample is filtered through a Whatman No. 4 filter paper, and the filtrate of each sample is collected.

6. $As_{420}$ and $Ab_{420}$ are measured from the filtrates of the samples and a blank as follows:

   a. For each sample, 2 ml of the filtrate is transferred to a test tube and diluted to 10 ml with 8 ml of the sodium borate buffer.

   b. Three reagent blanks are formed by diluting 2 ml of 0.025N NaOH to 10 ml with 8 ml of the sodium borate buffer.

   c. 2 ml aliquots of each buffered sample and each blank are then transferred to separate test tubes.

   d. 200 μl of the 0.3M TNBS solution is added to each sample and blank, mixed for 5 seconds with a vortex mixer then placed in a light free area for 15 minutes.

   e. The TNBS reaction is terminated at exactly 15 minutes for each blank and sample by adding 4 ml of the phosphate-sulfite solution.

   f. The absorbance of the samples and blanks is measured against deionized water at 420 nm on a spectrophotometer within 20 minutes after the addition of the phosphate-sulfite buffer.

   g. $As_{420}$ is determined by averaging the measured absorbance of the samples at 420 nm; and $Ab_{420}$ is determined by averaging the absorbance of the blanks at 420 nm.

   h. If necessary, as a result of not being able to obtain an accurate absorbance due to the concentration of the sample, step 4(a) is repeated and diluted by a factor of 10 with the sodium borate buffer. Steps 6(b)-6(g) are then repeated with the diluted sample. This is repeated until an accurate absorbance can be obtained. F in the TNBS equation is equal to 1 if no dilution is required, and is equal to the dilution factor if dilution is required (e.g. 1 dilution by a factor of 10 will result in an F of 0.1, 2 dilutions by a factor of 10 will result in an F of 0.01, etc.).

7. The protein content of each sample (P value) is determined using a Kjeldahl or Kjel-Foss analysis. The Nitrogen-Ammonia-Protein Modified Kjeldahl Method of A.O.C.S. Methods Bc4-91 (1997), Aa 5-91 (1997), and Ba 4d-90 (1997) are used in the determination of the protein content. The Nitrogen-Ammonia-Protein Modified Kjeldahl Method may be performed as follows with a soy material sample. 0.0250 - 1.750 grams of the soy material are weighed into a standard Kjeldahl flask. A commercially available catalyst mixture of 16.7 grams potassium sulfate, 0.6 grams titanium dioxide, 0.01 grams of copper sulfate, and 0.3 grams of pumice is added to the flask, then 30 milliliters of concentrated sulfuric acid is added to the flask. Boiling stones are added to the mixture, and the sample is digested by heating the sample in a boiling water bath for approximately 45 minutes. The flask should be rotated at least 3 times during the digestion. 300 milliliters of water is added to the sample, and the sample is cooled to room temperature. Standardized 0.5N hydrochloric acid and distilled water are added to a distillate receiving flask sufficient to cover the end of a distillation outlet tube at the bottom of the receiving flask. Sodium hydroxide solution is added to the digestion flask in an amount sufficient to make the digestion solution strongly alkaline. The digestion flask is then immediately connected to the distillation outlet tube, the contents of the digestion flask are thoroughly mixed by shaking, and heat is applied to the digestion flask at about a 7.5-min boil rate until at least 150 milliliters of distillate is collected. The contents of the receiving flask are then titrated with 0.25N sodium hydroxide solution using 3 or 4 drops of methyl red indicator solution — 0.1 % in ethyl alcohol. A blank determination of all the reagents is conducted simultaneously with the sample and similar in all respects, and correction is made for blank determined on the reagents. The nitrogen content of the sample is determined according to the formula: Nitrogen (%) = 1400.67 × [[ (Normality of standard acid) x (Volume of standard acid used for sample (ml))] - [(Volume of standard base needed to titrate 1 ml of standard acid minus volume of standard base needed to titrate reagent blank carried through method and distilled into 1 ml standard acid (ml)) x (Normality of standard base)] - [(Volume of standard base used for the sample (ml)) x (Normality of standard base)]] / (Milligrams of sample). The protein content is 6.25 times the nitrogen content of the sample.

8. The TNBS value is then determined using the $As_{420}$, $Ab_{420}$, F, and P values determined in steps 6 and 7.

As used herein, the term "mechanical hardness" refers to the hardness of a confectionary food bar as measured by the grams of force necessary to compress the bar a preset distance using a probe. Mechanical hardness is measured utilizing a Texture Expert Exceed Texture Analyzer--#TAxT21 (25 kg load cell) and corresponding software, where a TA-55 probe is the probe used for determining mechanical hardness. The force of the Texture Analyzer is calibrated for zero force (no weight on the calibration platform) and for 5 kg (5 kg weight on the calibration platform). The probe is calibrated by setting the distance of the probe as close as possible to the Analyzer platform. The mechanical hardness of the food bar is measured by placing the food bar on the platform centered under the probe. The Texture Analyzer is set to move the probe 1 mm/s at a force of 100g, and the probe is driven into the food bar up to half the height of the food bar. The Texture Analyzer is also set to acquire 200 data points per second during the insertion of the probe into the food bar. After the probe has retracted and finished moving, the food bar is moved on the platform to position one side of the food bar under the probe, and the mechanical hardness of the food bar is measured in the same manner on the side of the food bar as the center was measured. The mechanical hardness of the other side of the food bar is then measured in the same manner. The measured "mechanical hardness" is then calculated as the average of the center and side measurements.

The term "initial mechanical hardness", as used herein, refers to the mechanical hardness of the food bar within 1 day (24 hours) of formulation of the food bar.

"Shelf-life", as the term is used herein, refers to the maintenance of softness of a confectionary food bar over an extended period of time. In particular, as used herein, a confectionary food bar has a desirable shelf-life if the mechanical hardness of the food bar increases less than 200 g of force over a period of 35 days from the formulation of the food bar.

As used herein, measurements determining an "increase in mechanical hardness" over time are made on food bars which are stored in a controlled environment chamber at 29°C during the period prior to testing the mechanical hardness, excepting periods when the food bar was taken out of the controlled evironment chamber for previous mechanical hardness measurements.

"Retained on a 325 mesh (U.S.) screen" as used herein, refers to the amount of a particulate material that is retained on a 325 mesh (U.S.) screen (44 μm screen) after the particulate material is placed on the screen; the screen is equipped with a Alpine Air Jet Sieve 200, vacuum gauge, and cleaner; and the material on the screen pulled with vacuum for 3 minutes to draw small particulate material through the screen.

"Water absorption capacity", as used herein, refers to the amount of water absorbed by a soy protein material as measured by the AACC 88-04 method at pH 5.5.

Novel protein compositon for use in confectionary food bars and novel confectionary food bars

Protein Composition

The present invention is directed to a protein containing composition that is useful for formulating confectionary food bars that contain relatively high amounts of protein yet are texturally soft and retain softness over an extended period of time so that the food bars have a long shelf-life. The protein containing composition contains a structural protein material and a binding protein material. The structural protein material provides structural body to the confectionary food bar, while the binding protein material serves to bind the ingredients of the food bar together.

The structural protein material of the protein containing composition is a soy protein isolate containing at least 90% soy protein by weight of the structural protein material. The structural protein material is moderately soluble in water, and has an SSI of 20% to 40%. The soy protein in the structural protein material is unhydrolyzed or has been subjected to little hydrolysis, having a TNBS value of less than 35. The structural protein material has a moderate water absorption capacity, having a typical water absorption capacity of 2.7 to 3.2 grams of water per gram of protein material at a pH of 5.5.

In a preferred embodiment, the structural protein material has a relatively large particle size. The present inventors have found that a large particle size structural protein material decreases the chewiness of a confectionary food bar in which it is incorporated in accordance with the present invention relative to a similar structural protein material having smaller particle size, while maintaining an equivalent softness. It is preferred that the large particle size structural protein material have a particle size such that at least 50% of the structural protein material, by weight, is retained on a 325 mesh screen (U.S.), or at least 50% of the structural protein material, by weight, has a particle size of at least 44 $\mu$m.

The binding protein material of the protein containing composition is a soy protein isolate containing at least 90% soy protein by weight of the binding protein material. The binding protein material is highly soluble in water, and has a SSI of at least 70%. The soy protein in the binding protein material is highly hydrolyzed, having a TNBS value of at least 75. The binding protein material has a relatively low water absorption capacity, having a typical water absorption capacity of 1.4 to 1.6 g of water per gram of protein material at a pH of 5.5. The binding protein material also has a low viscosity in an aqueous medium, an aqueous slurry containing 20% binding protein material, by weight, preferably having an RVA viscosity of less than 100 cps at 25°C, more preferably having an RVA viscosity of less than 50 cps at 25°C.

The binding protein material is dispersed in the structural protein material in the protein containing composition. The protein containing composition must contain at least 5% of the binding protein material, by weight, and at least 5% of the structural protein material, by weight, where the total of the binding protein material and the structural protein material forms at least 90% of the protein containing composition, by weight. The mixture of the binding protein material and the structural protein material provides a softening effect on the texture of a confectionary food bar containing the protein containing compositon relative to a confectionary food bar containing either the binding protein material or the structural protein material alone. Preferably the protein containing composition contains from 5% to 95% of the binding protein material, by weight, combined with from 95% to 5% of the structural protein material, by weight. More preferably the protein containing material contains from 10% to 80% of the binding protein, by weight, and from 90% to 20% of the structural protein material, by weight, since the softening effect of the combination of the binding protein material and the structural protein material is greatest at these levels. Most preferably, the protein containing composition contains from 20% to 60% of the binding protein material, by weight, and from 80% to 40% of the structural protein material, by weight.

Confectionary Food Bar Composition

The present invention is also directed to a confectionary food bar containing a structural protein material, a binding protein material, and at least one carbohydrate. The confectionary food bar contains from 20% to 45% soy protein, by weight, and is texturally soft and retains softness over an extended period of time so that the food bar has a long shelf-life. The combination of the structural protein material and the binding protein material provides the food bar with a soft texture that is not possible in a confectionary food bar formed utilizing either the structural protein material or the binding protein material alone. The structural protein material provides structural body to the confectionary food bar, while the binding protein material serves to bind the ingredients of the food bar together.

The structural protein material of the confectionary food bar is a soy protein isolate containing at least 90% soy protein by weight of the structural protein material. The structural protein material is moderately soluble in water, and has an SSI of 20% to 40%. The soy protein in the structural protein material is unhydrolyzed or has been subjected to little hydrolysis, and the structural protein material has a TNBS value of less than 35. The structural protein material has a moderate water absorption capacity, having a typical water absorption capacity of 2.7 to 3.2 grams of water per gram of protein material at a pH of 5.5.

In a preferred embodiment, the structural protein material has a relatively large particle size. The present inventors have found that a large particle size structural protein material decreases the chewiness of the confectionary food bar in which it is incorporated in accordance with the present invention relative to a similar structural protein material having smaller particle size, while maintaining an equivalent softness. It is preferred that the large particle size structural protein material have a particle size such that at least 50% of the structural protein material, by weight, is retained on a 325 mesh screen (U.S.), or at least 50% of the structural protein material, by weight, has a particle size of at least 44 μm.

The binding protein material of the confectionary food bar is a soy protein isolate containing at least 90% soy protein by weight of the binding protein material. The binding protein material is highly soluble in water, and has an SSI of at least 70%. The soy protein in the binding protein material is highly hydrolyzed, and the binding protein material has a TNBS value of at least 75. The binding protein material has a relatively low water absorption capacity, having a typical water absorption capacity of 2.0 to 2.4 g of water per gram of protein material at a pH of 5.5. The binding protein material also has a low viscosity in an aqueous medium, preferably an aqueous slurry containing 20% of the binding protein material, by weight, having a RVA viscosity of less than 100 cps at 25°C, and more preferably less than 50 cps at 25°C.

The binding protein material and the structural protein material are dispersed in the confectionary food bar. The confectionary food bar must contain at least 5% of the binding protein material, by weight of total protein in the food bar, and at least 5% of the structural protein material, by weight of total protein in the food bar. Preferably, the total protein from the binding protein material and the structural protein material provides at least 90% of the total protein in the food bar, by weight. The mixture of the binding protein material and the structural protein material provides a softening effect on the texture of the confectionary food bar relative to a confectionary food bar containing either the binding protein material or the structural protein material alone. Preferably the confectionary food bar contains from 5% to 95% of the binding protein material, by weight of total protein contributing ingredients in the food bar, combined with from 95% to 5% of the structural protein material, by weight of total protein contributing ingredients in the food bar. More preferably the confectionary food bar contains from 10% to 80% of the binding protein, by weight of total protein contributing ingredients in the food bar, and from 90% to 20% of the structural protein material, by weight of total protein contributing ingredients in the food bar, since the softening effect of the combination of the binding protein material and the structural protein material is greatest at these levels. Most preferably, the confectionary food bar contains from 20% to 60% of the binding protein material, by weight of total protein contributing ingredients in the food bar, and from 80% to 40% of the structural protein material, by weight of total protein contributing ingredients in the food bar. In a most preferred embodiment, all of the soy protein in the confectionary food bar is provided by the structural protein material and the binding protein material.

Preferably the structural protein material and the binding protein material in the confectionary food bar are present in the food bar in a weight ratio of from 1.0 : 4.0 to 9.0 : 1.0 structural protein material to binding protein material. Most preferably the structural protein material and the binding protein material are present in the food bar in a weight ratio of from 1.0 : 1.5 to 4.0 : 1.0 structural protein material to binding protein material. In the most preferred embodiment of the present invention, the structural protein material and the binding protein material are present in the above ratios, and the structural protein material and binding protein material provide all the protein in the confectionary food bar, where the protein in the structural protein material and the binding protein material is soy protein.

The confectionary food bar may also contain protein from sources other than the structural protein material and the binding protein material, and from sources other than soy. For example, dairy proteins from whey protein concentrates, whey protein isolates, whey protein hydrolyzates, and caseinates, either calcium and/or sodium blends, are useful in the confectionary food bar in conjunction with the structural protein material and the binding protein material.

The carbohydrate of the confectionary food bar is selected from one or more digestible carbohydrate, one or more indigestible carbohydrate, or a mixture thereof. Preferably the carbohydrate contains a digestible carbohydrate selected from high fructose corn syrup, corn syrup, sucrose, honey, and glucose-fructose syrup, but other digestible carbohydrates may be included. In a preferred embodiment the digestible carbohydrate contains a mixture of 63 DE (degree of esterification) corn syrup and high fructose corn syrup (55% solids) that is cooked to a standard 82 Brix. Most preferably, this mixture has a ratio of 63 DE corn syrup to 55% High Fructose Corn Syrup of from 85:15 to 15:85 parts by weight, and most preferably 55:45 parts by weight.

The carbohydrate may also include an indigestible carbohydrate, preferably polymers such as polydextrose, sorbitol, or xylitol in a 70% solution (solids in water). The indigestible carbohydrate may also include a fiber such as soy cotyledon fiber, or may be glycerin, maltitol, hydrogenated starch hydrolysates, or eryrthritol. Preferred soy cotyledon fiber materials for use as the indigestible carbohydrate include FIBRIM® 1020, 1260, 1450, and 2000 which are commercially available from The Solae Company, St. Louis, Missouri. The indigestible carbohydrate is preferably included in the confectionary food bar at a level of from 0%, by weight, to 6%, by weight.

The confectionary food bar also preferably contains a flavoring agent. Preferred flavoring agents include cocoa powder, peanut flavor, vanilla, chocolate, and caramel.

The confectionary food bar may also be enrobed in a coating, if desired. The optional coating may be formed utilizing any conventional commercially available coating. The coating may be a sugar based or sugar free compound coating.

The confectionary food bar of the present invention has a desirable soft palatable texture. The confectionary food bar of the invention has an initial mechanical hardness of from 100 g force to 750 g force. More preferably the confectionary food bar has an initial mechanical hardness of from 100 g force to 350 g force. Most preferably the confectionary food bar has an initial mechanical hardness of from 100 g force to 250 g force.
The confectionary food bar of the present invention also has a desirable long shelf life, and maintains its textural softness and palatability for an extended period of time. A long shelf-life is especially desirable in high protein confectionary food bars since such food bars are often displayed for sale on a retail shelf for extended periods of time. The confectionary food bar of the present invention preferably has an increase in mechanical hardness of less than 200 g force for a period of 35 days from the formulation of the food bar. More preferably, the food bar has an increase in mechanical hardness of less than 150 g force for a period of 35 days from the formulation of the food bar. Most preferably, the confectionary food bar of the present invention has an increase in mechanical hardness of less than 100 g force for a period of 35 days from the formulation of the food bar.

Process for producing a novel protein compositon for use in confectionary food bars and for producing novel confectionary food bars

Novel protein composition

The novel protein composition of the present invention is produced by mixing a structural protein material and a binding protein material. The structural protein material and the binding protein material can be mixed by dry blending the materials according to conventional processes for dry blending powdered materials. Alternatively, an aqueous slurry of the structural protein material can be mixed with an aqueous slurry of the binding protein material, the resulting slurry mixed by stirring or subjecting the slurry to shear, and the mixed slurry dried, preferably by spray drying, to produce the novel protein composition. The structural protein material and the binding protein material have the characteristics described above, respectively.
The structural protein material and the binding protein material are each soy protein isolate materials containing at least 90% soy protein, by weight of the dry structural or binding protein material. The structural protein material and the binding protein material are produced from a soy protein curd material that is formed in accordance with conventional soy protein isolate production processes.
The soy protein curd material may be formed from commodity soybeans according to the following process. The soybeans are detrashed by passing the soybeans through a magnetic separator to remove iron, steel, and other magnetically susceptible objects, followed by shaking the soybeans on progressively smaller meshed screens to remove soil residues, pods, stems, weed seeds, undersized beans, and other trash. The detrashed soybeans are then cracked by passing the soybeans through cracking rolls. Cracking rolls are spiral-cut corrugated cylinders which loosen the hull as the soybeans pass through the rolls and crack the soybean material into several pieces. Preferably the cracked soybeans are conditioned to 10% to 11% moisture at 63 to 74°C to improve the storage quality retention of the soybean material. The cracked soybeans are then dehulled, preferably by aspiration. Soy hypocotyls, which are much smaller than the cotyledons of the soybeans, may be removed by shaking the dehulled soybeans on a screen of sufficiently small mesh size to remove the hypocotyls and retain the cotyledons of the beans. The hypocotyls need not be removed since they comprise only about 2%, by weight, of the soybeans while the cotyledons comprise about 90% of the soybeans by weight, however, it is preferred to remove the hypocotyls since they are associated with the beany taste of soybeans. The dehulled soybeans, with or without hypocotyls, are then flaked by passing the soybeans through flaking rolls. The flaking rolls are smooth cylindrical rolls positioned to form flakes of the soybeans as they pass through the rolls having a thickness of from about 0.01 inch to to about 0.015 inch.
The flakes are then defatted. The flakes are defatted by extracting the flakes with a suitable solvent to remove the oil from the flakes. Preferably the flakes are extracted with n-hexane or n-heptane in a countercurrent extraction. The defatted flakes should contain less than 1.5% fat or oil content, and preferably less than 0.75%. The solvent-extracted defatted flakes are then desolventized to remove any residual solvent using conventional desolventizing methods, including desolventizing with a flash desolventizer-deodorizer stripper, a vapor desolventizer-vacuum deodorizer, or desolventizing by down-draft desolventization. Alternatively, the flakes may be defatted by a conventional mechanical expeller rather than by solvent extraction. Defatted soy flakes are commercially available, and the steps of producing the flakes may be avoided by purchasing the flakes.
Preferably, the defatted flakes are comminuted into a soy flour or a soy grit to improve the protein extraction yield from the flakes. The flakes are comminuted by grinding the flakes to the desired particle size using conventional milling and grinding equipment such as a hammer mill or an air jet mill. Soy flour has a particle size wherein at least 97%, by weight, of the flour has a particle size of 150 microns or less (is capable of passing through a No. 100 mesh U.S. Standard Screen). Soy grits, more coarsely ground than soy flour, have a particle size greater than soy flour but smaller than soy flakes. Preferably the soy grit has a particle size of from 150 microns to about 1000 microns (is capable of passing though a No. 10 - No. 80 U.S. Standard Screen). Preferably the soy flakes, soy flour, or soy grit is treated with a sulfite such as sodium sulfite to improve the flow characteristics and microbial control of the soy material.

To produce the soy protein curd material, the soy flakes, soy flour, or soy grit is/are extracted with water or an aqueous solution having a pH of from 6.7 to 11 to extract the protein in the flakes/flour/grit from insoluble materials such as fiber. The soy flakes, flour, or grit is/are preferably extracted with an aqueous sodium hydroxide solution having a pH from about 8 to about 11, although other aqueous alkaline extractants such as ammonium hydroxide are also effective. Preferably the weight ratio of the extractant to the soy flake/flour/grit material is from about 5:1 to about 16:1.

After extraction, the extract is separated from the insoluble materials. Preferably the separation is effected by filtration or by centrifugation and separation of the extract from the insoluble materials. The pH of the separated extract is then adjusted to about the isoelectric point of soy protein to precipitate a soy protein curd so that the soy protein can be separated from soy solubles including flatulence inducing oligosaccharides and other water soluble carbohydrates. The pH of the separated extract is adjusted with a suitable acid to the isoelectric point of soy protein, preferably to a pH of from about pH 4 to about pH 5, most preferably from about pH 4.4 to about pH 4.6. Suitable edible acids for adjusting the pH of the extract to about the isoelectric point of soy protein include hydrochloric acid, sulfuric acid, nitric acid, or acetic acid. The precipitated protein material (curd) is separated from the extract (whey), preferably by centrifugation or filtration to produce the soy protein curd material. The separated soy protein curd material is preferably washed with water to remove residual solubles, preferably at a weight ratio of water to protein material of about 5:1 to about 12:1.

Structural Protein Material

To produce the structural protein material of the present invention, the soy protein curd material is first neutralized to a pH of 6.8 to 7.2 with an aqueous alkaline solution or an aqueous alkaline earth solution, preferably a sodium hydroxide solution or a potassium hydroxide solution. The neutralized soy protein curd material is then heated. Preferably the neutralized soy curd is heated at a temperature of from about 75°C to about 160°C for a period of from about 2 seconds to about 2 hours, where the curd is heated for a longer time period at lower temperatures and a shorter period at higher temperatures. More preferably the soy protein curd material is treated at an elevated temperature and under a positive pressure greater than atmospheric pressure.

The preferred method of heating the soy protein curd material is treating the soy curd at a temperature elevated above ambient temperatures by injecting pressurized steam into the curd, hereafter referred to as "jet-cooking." The following description is a preferred method of jet-cooking the soy protein curd material, however, the invention is not limited to the described method and includes any obvious modifications which may be made by one skilled in the art.

The soy protein curd material is introduced into a jet-cooker feed tank where the soy curd is kept in suspension with a mixer which agitates the soy curd. The curd is directed from the feed tank to a pump which forces the curd through a reactor tube. Steam is injected into the curd under pressure as the curd enters the reactor tube, instantly heating the curd to the desired temperature. The temperature is controlled by adjusting the pressure of the injected steam, and preferably is from about 75°C to about 160°C, more preferably from about 100°C to about 155°C. The curd is treated at the elevated temperature for treatment time being controlled by the flow rate of the slurry through the tube. Preferably the flow rate is about 18.5 lbs./minute, and the cook time is about 9 seconds at about 150°C.

To produce the structural protein material the heated curd is then cooled and dried. The curd may be cooled and dried in any conventional manner known in the art. In a preferred embodiment of the present invention, the curd is cooled by flash vaporization. The heated curd is flash vaporized by introducing the hot curd into a vacuumized chamber having an internal temperature of from 20°C to 85°C, which instantly drops the pressure about the curd to a pressure of from about 25 mm to about 100 mm Hg, and more preferably to a pressure of from about 25 mm Hg to about 30 mm Hg. Most preferably the hot curd is discharged from the reactor tube of the jet-cooker into the vacuumized chamber, resulting in an instantaneous large pressure and temperature drop which vaporizes a substantial portion of water from the curd, instantly cooling the curd to a temperature. Preferably the vaccumized chamber has an elevated temperature up to about 85°C to prevent the gelation of the soy protein curd material upon introduction of the curd into the vacuumized chamber.

Applicants believe the flash vaporization step provides a soy material having low concentrations of volatile compounds associated with the beany, bitter flavor of soy such as n-pentane, diacetyl, pentanal, hexanal, 2-heptanone, 2-pentyl furan, and octanal. The heat treatment under pressure followed by the rapid pressure drop and vaporization of water also causes vaporization of substantial amounts of these volatile components, removing the volatile components from the soy material, and thereby improving the taste of the soy material.

The flash vaporized structural protein material may then be dried, preferably by spray drying. Preferably the spray-dryer is a co-current flow dryer where hot inlet air and the structural protein material, atomized by being injected into the dryer under pressure through an atomizer, pass through the dryer in a co-current flow.

In a preferred embodiment, the structural protein material is injected into the dryer through a nozzle atomizer. Although a nozzle atomizer is preferred, other spray-dry atomizers, such as a rotary atomizer, may be utilized. The curd is injected into the dryer under enough pressure to atomize the slurry. Preferably the slurry is atomized under a pressure of about 3000 psig to about 5500 psig, and most preferably about 3500 to 5000 psig. Hot air is injected into the dryer through a hot air inlet located so the hot air entering the dryer flows co-currently with the atomized soy curd sprayed from the atomizer. The hot air has a temperature of about 285°C to about 315°C, and preferably has a temperature of about 290°C to about 300°C.

The dried structural soy protein material is collected from the spray dryer. Conventional means and methods may be used to collect the soy material, including cyclones, bag filters, electrostatic precipitators, and gravity collection. The structural soy protein material may be ground according to conventional powder grinding processes, however, since a large particle size structural soy protein material is preferred to provide soft texture, it is preferable that the structural soy protein material remain unground.

Binding Protein Material

The binding protein material is formed from the soy protein curd material in much the same manner as the structural protein material, however, a enzymatic protein hydrolyzation step is included to hydrolyze the protein. The soy protein curd material is first neutralized to a pH of from 7.2 to 7.6 with an aqueous alkaline solution or an aqueous alkaline earth solution, preferably a sodium hydroxide solution or a potassium hydroxide solution. The neutralized soy protein curd is heated and cooled, preferably by jet cooking and flash cooling, in the same manner as described above with respect to preparation of the structural protein material. Preferably the curd is cooled to 55°C to 60°C after heating.

The soy protein curd material is then treated with an enzyme that is effective to hydrolyze soy protein at a temperature and for a time effective to hydrolyze the soy protein curd material so that the soy protein curd material has an TNBS value of at least 70. A preferred enzyme to effect the protein hydrolysis is bromelain, where the bromelain is added to the soy protein curd material at a concentration of from 1% to 10% enzyme to total weight of the solids in the soy protein curd. The enzyme is contacted with the soy protein curd material at a temperature of from 40°C to 65°C, preferably at about 60°C for a period of from 10 minutes to 65 minutes, preferably from 20 minutes to 45 minutes, to hydrolyze the protein.

The hydrolysis is terminated by heating the hydrolyzed soy protein curd material to a temperature effective to inactivate the enzyme. Most preferably the hydrolyzed soy protein curd material is jet cooked to inactivate the enzyme, and flash cooled then dried as described above with respect to producing the structural protein material. The flash cooled hydrolyzed soy protein material is the binding protein material, and the dried hydrolyzed material is the dried binding protein material.

Confectionary Food Bars

The confectionary food bars of the present invention are formed by blending the structural protein material; the binding protein material; a carbohydrate containing material containing at least one carbohydrate; flavor ingredients such as cocoa powder, peanut flavor, vanilla, chocolate, and caramel; and any other desired ingredients such as vitamins and minerals into a dough. The dough is then extruded and cut to form the food bars according to conventional processes for extruding confectionary food bars. If desired, the food bars may then be enrobed in a coating.

Preferably the dough is formed by combining a syrup of the carbohydrate material and other ingredients, such as flavor ingredients, with a dry blend of the structural protein material and the binding protein material to form the dough. The syrup of carbohydrate material preferably contains at least one carbohydrate selected from the group consisting of high fructose corn syrup, corn syrup, sucrose, honey, high maltose corn syrup, and glucose-fructose syrup, polydextrose in a 70% solution (solids in water), sorbitol in a 70% solution (solids in water), xylitol in a 70% solution (solids in water), glycerin, maltitol, erythritol, and soy cotyledon fiber in a 70% solution (solids in water). The syrup is cooked at a temperature of 108°C then cooled to 50°C to 65°C to bring the syrup to 76° to 86° Brix, and more preferably to 80° to 84° Brix. The flavors and other ingredients are then added to the syrup, and the syrup and protein materials are combined and mixed. Preferably the structural and binding protein materials are included in the mixture so that the protein materials are present in an amount of from 20% to 45% of the mixture, by weight. After the dough is thoroughly mixed it is extruded. The extruded dough is then cut into food bars of a desirable size. If desired, the food bars may be enrobed with a commercially available coating.

EXAMPLES

The present invention is illustrated by the following examples. The formulations of the examples are intended to be illustrative.

Example 1

Protein compositions in accordance with the present invention are provided. A structural protein material is provided having a soy protein content of 91.5% by weight on a dry basis. The structural protein material has a TNBS value of 31, a water absorption capacity of 3.2 ml/g at pH 5.44, and an SSI of 35%. The structural protein material is a large particle size material, where 92.7% of the structural protein material, by dry weight, is retained on a 325 mesh (U.S.) screen. A binding protein material is also provided having a soy protein content of 91 %, by dry weight. The binding protein material has a TNBS value of 87, a water absorption capacity of 1.59 ml/g at pH 6.3 and a SSI of 83%. Four protein compositions according to the present invention are formed by dry blending the structural protein material and the binding protein material in weight ratios of 4:1; 3:2; 2:3; and 1:4 of structural protein material to binding protein material, respectively.

Example 2

A raspberry/yogurt confectionary food bar according to the present invention is prepared. The rasberry/yogurt confectionary bar has a protein content of 23.7%, by weight. A liquid mixture is prepared containing 63 DE corn syrup, glycerine, and polydextrose (70% solids). The liquid mixture is heated to 60°C then cooled to 40°C - 50°. Sorbitol, beet powder, citric acid, malic acid, lactic acid (60% powder), and raspberry flavors are blended with the liquid mixture. A large particle structural protein material, a binding protein material, soy protein nuggets, powdered dextrose, fructose, cellulose gum, sweet dairy whey, Vream A, raspberry powder, raspberry nuggets, corn starch, Novogel BK 2130, salt, vitamins & minerals are then mixed with the liquid mixture to provide a dough. The structural protein material has a soy protein content of 91%, by dry weight, a TNBS value of 31, a water absorption capacity of 3.2 ml/g at pH 5.44, and a SSI of 35%, where 92.7% of the structural protein material, by dry weight, is retained on a 325 mesh (U.S.) screen. The binding protein material has a TNBS value of 87, a water absorption capacity of 1.59 ml/g at pH 6.3 and a SSI of 83%. The dough is kneaded to thoroughly mix the ingredients, then the dough is extruded. The extrudate is cut into food bars. The food bars are then coated with a yogurt compound coating. The raspberry/yogurt food bar contains the ingredients in the proportions set forth in Table 1.

Table 1

| Ingredient | mg/g of composition |
|---|---|
| 63 DE Corn Syrup | 190.0 |
| Glycerine | 39.6 |
| Polydextrose (70%) | 70.0 |
| Sorbitol | 65.0 |
| Beet Powder | 4.7 |
| Citric Acid | 4.7 |
| Malic Acid | 1.9 |
| Lactic Acid (60% Powder) | 1.6 |
| Raspberry Flavors | 2.0 |
| Structural Protein Material | 118.3 |
| Binding Protein Material | 78.6 |
| Soy Protein Nuggets | 28.2 |
| Powdered Dextrose | 90.0 |
| Fructose | 90.0 |
| Cellulose Gum | 15.5 |
| Sweet Dairy Whey | 15.1 |
| Vream A | 7.1 |
| Raspberry Powder | 9.4 |
| Raspberry Nuggets | 4.7 |
| Corn Starch | 4.4 |
| Novogel BK 2130 | 3.1 |
| Salt | 0.9 |
| Vitamins & Minerals | 5.2 |
| Yogurt Compound Coating | 150.0 |

Example 3

A high protein confectionary food bar according to the present invention is prepared. A liquid mixture containing glycerin and polydextrose (70% solids) is prepared, heated to 60°C and cooled to 40°C to 50°C. Structural protein material, binding protein material, Lycasin 80/55, Farbest 290 Calcium Caseinate, Farbest WPC (80%), shortening, lecithin, dutch cocoa, chocolate flavors, vanilla (4X), salt, sucralose, and vitamins and minerals are mixed with the liquid mixture to form a dough. The structural protein material has a soy protein content of 91%, by dry weight, a TNBS value of 31, a water absorption capacity of 3.2 ml/g at pH 5.44, and a SSI of 35%, where 92.7% of the structural protein material, by dry weight, is retained on a 325 mesh (U.S.) screen. The binding protein material has an TNBS value of 87, a water absorption capacity of 1.59 ml/g at pH 6.3 and a SSI of 83%. The dough is kneaded to thoroughly mix the components, and then is extruded and cut into a food bar. The food bar contains 40.3% protein, by weight, and contains the ingredients in the amounts set forth in Table 2.

Table 2

| Ingredient | mg/g of composition |
|---|---|
| Glycerin | 188.3 |
| Polydextrose (70% solids) | 94.2 |
| Lycasin 80/55 | 96.2 |
| Structural Protein Material | 93.2 |
| Binding Protein Material | 62.1 |
| Farbest 290 Calcium Caseinate | 155.3 |
| Farbest WPC, 80% | 155.3 |
| Shortening | 71.9 |
| Lecithin | 7.0 |
| Dutch Cocoa | 57.5 |
| Chocolate Flavors | 7.2 |
| Vanilla (4X) | 2.9 |
| Salt | 1.4 |
| Sucrolose | 0.3 |
| Vitamins and Minerals | 7.2 |

Example 4

A medical nutrition confectionary food bar is prepared in accordance with the present invention. The medical nutrition confectionary food bar contains 22.1% protein, by weight. A liquid mixture is prepared containing 63 DE corn syrup, glycerine, and high fructose corn syrup (55% solids). The liquid mixture is heated to 40°C to 50°C. A structural protein material, a binding protein material, soy cotyledon fiber (FIBRIM® 1450 available from Solae Company, St. Louis, MO), fructooligosaccharides, oil, cellulose RC 951, and citric acid are mixed with the liquid mixture to form a dough. The The structural protein material has a soy protein content of 91 %, by dry weight, a TNBS value of 31, a water absorption capacity of 3.2 ml/g at pH 5.44, and a SSI of 35%, where 92.7% of the structural protein material, by dry weight, is retained on a 325 mesh (U.S.) screen. The binding protein material has a TNBS value of 82, a water absorption capacity of 1.2 at pH 5.5 and a SSI of 75%. The dough is kneaded to thoroughly mix the components, and then is extruded and cut into a food bar. The food bar contains the ingredients in the amounts set forth in Table 3.

Table 3

| Ingredient | mg/g composition |
|---|---|
| Structural Protein Material | 170.0 |
| Soy Cotyledon Fiber | 70.0 |
| 63 DE Corn Syrup | 160.0 |
| High Fructose Corn Syrup (55% solids) | 240.0 |
| Maltodextrin (10 DE) | 110.0 |
| Binding Protein Material | 80.0 |
| Glycerin | 18.0 |

(continued)

| Ingredient | mg/g composition |
|---|---|
| Oil | 40.0 |
| Fructooligosaccharides | 100.0 |
| Cellulose RC 591 | 10.0 |
| Citric Acid | 2.0 |

Example 5

Food bars containing 30% protein, by weight, are formed using different concentrations of a structural protein material and/or a binding protein material, and the mechanical hardness of the food bars is measured. SUPRO® 661, a soy protein isolate commercially available from Solae Company, St. Louis, MO, is used as the structural protein material. A binding protein material is prepared accordance with the description above, where the binding protein material has a TNBS value of 87, a water absorption capacity of 1.59 ml/g at pH 6.3 and a SSI of 83%. Six protein compositions are formed as follows: Composition 1—only the structural protein material (511 g); Composition 2—a 4:1 mixture of structural protein material to binding protein material, by weight (409 g structural protein material: 103 g binding protein material); Composition 3—a 3:2 mixture of structural protein material to binding protein material, by weight (307 g structural protein material: 206 g binding protein material); Composition 4—a 2:3 mixture of structural protein material to binding protein material, by weight (205 g structural protein material: 309 g binding protein material); Composition 5—a 1:4 mixture of structural protein material to binding protein material, by weight (102 g structural protein material: 413 g binding protein material); and Composition 6—only the binding protein material (506 g). Each protein composition is dry blended with 118 g of rice syrup solids (26 DE), 76 g of cocoa powder, 10.5 g of a vitamin and mineral premix, and 1:7 g of salt. 391 g of 63 DE corn syrup and 320 g high fructose corn syrup are mixed and cooked to 82° Brix, the temperature of the mixed syrup is adjusted to 60°C and 59 g of glycerin, 8.2 g of chocolate flavors, and 2 g of vanilla flavor are mixed into the syrup, then the syrup is cooled to 50°C to form a syrup for combination with one of the dry blended protein compositions. The dry blend of each protein composition and its respective syrup are mixed at 50°C for 3 minutes 45 seconds in a Winkworth mixer to form a dough. The dough is kneaded, and then sheeted onto a marble slab and cut to form a food bar. Six food bars are formed, one for each of the respective protein compositions. The food bars are stored at 29°C in a controlled environment chamber and are equilibrated to room temperature for measurement of the hardness. The mechanical hardness of the food bars is measured 1 day, 7 days, 14 days, 21 days, and 35 days after formulation. The measured mechanical hardness is shown in Table 4, where SPM = "structural protein material" and BPM = "binding protein material", and mechanical hardness is measured in units of grams of force.

Table 4

| **Period (Days)** | **Hardness** SPM | **Hardness** 4:1 SPM:BPM | **Hardness** 3:2 SPM:BPM | **Hardness** 2:3 SPM:BPM | **Hardness** 1:4 SPM:BPM | **Hardness** BPM |
|---|---|---|---|---|---|---|
| **1** | 493 | 166 | 148 | 204 | 293 | 512 |
| **7** | 692 | 275 | 190 | 293 | 412 | 695 |
| **14** | 768 | 305 | 190 | 322 | 499 | 748 |
| **21** | 866 | 363 | 224 | 364 | 567 | 893 |
| **35** | 888 | 432 | 228 | 393 | 671 | 1150 |

The results of Table 4 are shown in graphical form in Fig. 1. As both Table 4 and Fig. 1 show, the mechanical hardness, and, therefore, the texture, of the food bars containing both the structural protein material and the binding protein material is much softer than the food bars containing only the structural protein material or only the binding protein material. The food bars are particularly soft when the food bars contain a 3:2 ratio of structural protein material to binding protein material, by weight. Furthermore, the food bars containing both the structural protein material and binding protein material largely maintain their softness over a period of 35 days, particularly the food bars containing either 3:2 or 2:3 structural protein material to binding protein material, by weight.

Example 6

Food bars containing 30% protein, by weight, are formed using different concentrations of a large particle structural protein material and/or a binding protein material, and the mechanical hardness of the food bars is measured.

A large particle structural protein material is prepared according to the process described above. The large particle structural protein material has a a soy protein content of 91 %, by dry weight, a TNBS value of 31, a water absorption capacity of 3.2 ml/g at pH 5.44, and a SSI of 35%, where 92.7% of the structural protein material, by dry weight, is retained on a 325 mesh (U.S.) screen. The food bars are prepared in the same manner as described in Example 5 utilizing the same binding protein material together with the large particle structural protein material.
After the food bars are prepared, the food bars are stored at 29°C in a controlled environment chamber and are equilibrated to room temperature for measurement of the hardness of the bars. The mechanical hardness of the food bars is measured 1 day, 7 days, 14 days, 21 days, and 35 days after formulation. The measured mechanical hardness is shown in Table 5, where SPM = "large particle structural protein material" and BPM = "binding protein material", and mechanical hardness is measured in units of grams of force.

Table 5

| **Period (Days)** | **Hardness** SPM | **Hardness** 4:1 SPM:BPM | **Hardn ess** 3:2 SPM: BPM | **Hardness** 2:3 SPM:BPM | **Hardness** 1:4 SPM:BPM | **Hardness** BPM |
|---|---|---|---|---|---|---|
| **1** | 451 | 156 | 158 | 228 | 294 | 652 |
| **7** | 644 | 201 | 223 | 284 | 395 | 799 |
| **14** | 651 | 199 | 242 | 296 | 400 | 834 |
| **21** | 667 | 212 | 262 | 268 | 377 | 1116 |
| **35** | 669 | 255 | 364 | 407 | 652 | 1204 |

The results of Table 5 are shown in graphical form in Fig. 2. As both Table 5 and Fig. 2 show, the mechanical hardness, and, therefore, the texture, of the food bars containing both the large particle structural protein material and the binding protein material is much softer than the food bars containing only the large particle structural protein material or only the binding protein material. The food bars are particularly soft when the food bars contain a 4:1 or a 3:2 ratio of large particle structural protein material to binding protein material, by weight. Furthermore, the food bars containing both the large particle structural protein material and binding protein material largely maintain their softness over a period of 35 days, particularly the food bars containing either 4:1 or 3:2 large particle structural protein material to binding protein material, by weight. The large particle bars are also less chewy, a desirable characteristic in a soft confectionary food bar.

## Claims

**1.** A protein containing composition for use in confectionary food bars, comprising:

(a) a structural protein material containing at least 90% soy protein by weight, said structural protein material having a soluble solids index of between 20% and 40%, having a TNBS value, as defined in the description, of less than 35 and having a water absorption capacity of 2.7 to 3.2 grams of water per gram of protein material at a pH of 5.5;
(b) a binding protein material containing at least 90% soy protein by weight, said binding protein material having a soluble solids index of at least 70% and a TNBS value, as defined in the description, of at least 75,

wherein said binding protein material is dispersed in said structural protein material and wherein the protein containing composition contains at least 5 % of the binding protein material and at least 5 % of the structural protein material, by weight, where the total of the binding protein material and the structural protein material forms at least 90 % of the protein containing composition, by weight.

**2.** The protein containing composition of claim 1 wherein said structural protein material is a particulate material, wherein at least 50% of the particles of said particulate material are retained on a 44μm (325 mesh) (U.S.) screen.

**3.** The protein containing composition of claim 1 wherein an aqueous slurry of said binding protein material has an RVA viscosity, as defined in the description, of less than 100 cps at 25°C, where said binding protein material forms 20% of said slurry, by weight.

**4.** The protein containing composition of claim 1 wherein said structural protein material forms 20% to 90% of said composition, by weight, and said binding protein material forms 80% to 10% of said composition, by weight.

**5.** The protein containing composition of claim 4 consisting essentially of said structural protein material and said binding protein material.

**6.** The protein containing composition of one of claims 1-5, wherein at least 50% of the structural protein material has a particle size of at least 44 μm.

**7.** A confectionary food bar, comprising:

(a) a structural protein material containing at least 90% soy protein by weight, said structural protein material having a soluble solids index of between 20% and 40%, having a TNBS value, as defined in the description, of less than 35 and having a water absorption capacity of 2.7 to 3.2 grams of water per gram of protein material at a pH of 5.5;
(b) a binding protein material containing at least 90% soy protein by weight, said binding protein material having a soluble solids index of at least 70% and a TNBS value, as defined in the description, of at least 75; and
(c) a carbohydrate, selected from a digestible carbohydrate, an indigestible carbohydrate, or a mixture thereof,

wherein said confectionary food bar contains from 20% to 45% protein, by weight, and wherein the confectionary food bar contains at least 5 % of the binding protein material, by weight of total protein in the food bar and at least 5 % of the structural protein material, by weight of total protein in the food bar.

**8.** The confectionary food bar of claim 7 wherein all soy protein in said confectionary food bar is provided by said structural protein material and said binding protein material.

**9.** The confectionary food bar of claim 8 wherein said structural protein material and said binding protein material are present in said food bar in a weight ratio of from 1:4 to 9:1 structural protein material to binding protein material.

**10.** The confectionary food bar of claim 7 wherein said structural protein material and said binding protein material are present in said food bar in a weight ratio of from 1:4 to 9:1 structural protein material to binding protein material.

**11.** The confectionary food bar of claim 7 wherein said food bar has an initial mechanical hardness, as defined in the description, of from 100 g force to 750 g force.

**12.** The confectionary food bar of claim 11 wherein said food bar has an initial mechanical hardness, as defined in the description, of from 100 g force to 350 g force.

**13.** The confectionary food bar of claim 11 wherein said food bar has an increase in mechanical hardness, as defined in the description, of less than 200 g force for a period of 35 days from the formulation of said food bar.

**14.** The confectionary food bar of claim 11 wherein said food bar has an increase in mechanical hardness, as defined in the description, of less than 150 g force for a period of 35 days from formulation of said food bar.

**15.** The confectionary food bar of claim 11 wherein said food bar has an increase in mechanical hardness, as defined in the description, of less than 100 g force for a period of 35 days from formulation of said food bar.

**16.** The confectionary food bar of one of claims 7-15, wherein at least 50% of the structural protein material has a particle size of at least 44 μm.

**17.** A method of producing a soft confectionary food bar having a long shelf life comprising:

(A) mixing

(a) a structural protein material containing at least 90% soy protein by weight, said structural protein material having a soluble solids index of between 20% and 40% and having a TNBS value, as defined in the description, of less than 35 and having a water absorption capacity of 2.7 to 3.2 grams of water per gram of protein material at a pH of 5.5;
(b) a binding protein material containing at least 90% soy protein by weight, said binding protein material having a soluble solids index of at least 70%, a TNBS value, as defined in the description, of at least 75; and
(c) a carbohydrate, selected from a digestible carbohydrate, an indigestible carbohydrate, or a mixture thereof;
to form a dough containing from 20% to 45% protein, by weight; and

(B) sheeting and cutting said dough to form a confectionary food bar having an initial mechanical hardness hardness, as defined in the description, of less than 200g force which has an increase in mechanical hardness, as defined in the description, of less than 200 g force throughout a period of 35 days from the formulation of said bar.

**18.** The method of claim 17 wherein said structural protein material is a particulate material where at least 50% of the particles of said particulate material, by weight, are retained on a 44μm (325 mesh) (U.S.) screen.

**19.** The method of claim 17 herein an aqueous slurry of said binding protein material has an RVA viscosity, as defined in the description, of less than 100 cps at 25°C, where said binding protein material forms 20% of said slurry, by weight.

**20.** The method of one of claims 17-19, wherein at least 50% of the structural protein material has a particle size of at least 44 μm.

**Patentansprüche**

**1.** Proteinhaltige Zusammensetzung zur Verwendung in Nahrungsmittelriegeln, welche die folgende Schritte umfasst:

(a) ein Strukturproteinmaterial, welches mindestens 90 Gewichts-% Sojaprotein enthält, wobei das Strukturproteinmaterial einen Index an löslichen Feststoffen von 20% bis 40% aufweist, einen TNBS-Wert, der in der Beschreibung definiert ist, von weniger als 35 aufweist und ein Wasserabsorptionsvermögen von 2,7 bis 3,2 Gramm Wasser je Gramm Proteinmaterial bei einem pH-Wert von 5,5 aufweist;
(b) ein Binderproteinmaterial, welches mindestens 90 Gewichts-% Sojaprotein enthält, wobei das Binderproteinmaterial einen Index an löslichen Feststoffen von mindestens 70% aufweist und einen TNBS-Wert, der in der Beschreibung definiert ist, von mindestens 75 aufweist,

wobei das Binderproteinmaterial in dem Strukturproteinmaterial verteilt ist, und wobei die proteinhaltige Zusammensetzung mindestens 5 Gewichts-% Binderproteinmaterial und mindestens 5 Gewichts-% Strukturproteinmaterial enthält, wobei das Binderproteinmaterial und das Strukturproteinmaterial zusammen mindestens 90 Gewichts-% der proteinhaltigen Zusammensetzung bilden.

**2.** Proteinhaltige Zusammensetzung nach Anspruch 1, wobei es sich bei dem Strukturproteinmaterial um ein Teilchenmaterial handelt, wobei mindestens 50% der Teilchen des Teilchenmaterials von einem 44μm-Sieb (US-Maschenzahl: 325) aufgehalten werden.

**3.** Proteinhaltige Zusammensetzung nach Anspruch 1, wobei eine wässrige Schlämme des Binderproteinmaterials eine RVA-Viskosität, wie in der Beschreibung definiert, von weniger als 100 cP bei 25°C aufweist, wobei das Binderproteinmaterial 20 Gewichts-% der Schlämme bildet.

**4.** Proteinhaltige Zusammensetzung nach Anspruch 1, wobei das Strukturproteinmaterial 20 bis 90 Gewichts-% der Zusammensetzung bildet und das Binderproteinmaterial 80 bis 10 Gewichts-% der Zusammensetzung bildet.

**5.** Proteinhaltige Zusammensetzung nach Anspruch 4, welche im Wesentlichen aus dem Strukturproteinmaterial und dem Binderproteinmaterial besteht.

**6.** Proteinhaltige Zusammensetzung nach einem der Ansprüche 1 bis 5, wobei mindestens 50% des Strukturproteinmaterials eine Teilchengröße von mindestens 44 μm aufweisen.

**7.** Nahrungsmittelriegel, welcher die folgende Schritte umfasst:

(a) ein Strukturproteinmaterial, welches mindestens 90 Gewichts-% Sojaprotein enthält, wobei das Strukturproteinmaterial einen Index an löslichen Feststoffen von 20% bis 40% aufweist, einen TNBS-Wert, der in der Beschreibung definiert ist, von weniger als 35 aufweist und ein Wasserabsorptionsvermögen von 2,7 bis 3,2 Gramm Wasser je Gramm Proteinmaterial bei einem pH-Wert von 5,5 aufweist;
(b) ein Binderproteinmaterial, welches mindestens 90 Gewichts-% Sojaprotein enthält, wobei das Binderproteinmaterial einen Index an löslichen Feststoffen von mindestens 70% aufweist und einen TNBS-Wert, der in der Beschreibung definiert ist, von mindestens 75 aufweist; und
(c) ein Kohlenhydrat, das aus einem verdaubaren Kohlenhydrat, einem unverdaubaren Kohlenhydrat und einem Gemisch derselben ausgewählt ist,

wobei der Nahrungsmittelriegel 20 bis 45 Gewichts-% Protein enthält, und wobei der Nahrungsmittelriegel mindestens 5 Gewichts-% Binderproteinmaterial und mindestens 5 Gewichts-% Strukturproteinmaterial enthält, bezogen auf die Gesamtproteinmenge in dem Nahrungsmittelriegel.

**8.** Nahrungsmittelriegel nach Anspruch 7, wobei das gesamte Sojaprotein in dem Nahrungsmittelriegel von dem Strukturproteinmaterial und dem Binderproteinmaterial bereitgestellt wird.

**9.** Nahrungsmittelriegel nach Anspruch 8, wobei das Strukturproteinmaterial und das Binderproteinmaterial in dem Nahrungsmittelriegel in einem Gewichtsverhältnis von 1/4 bis 9/1 (Strukturproteinmaterial zu Binderproteinmaterial) vorliegen.

**10.** Nahrungsmittelriegel nach Anspruch 7, wobei das Strukturproteinmaterial und das Binderproteinmaterial in dem Nahrungsmittelriegel in einem Gewichtsverhältnis von 1/4 bis 9/1 (Strukturproteinmaterial zu Binderproteinmaterial) vorliegen.

**11.** Nahrungsmittelriegel nach Anspruch 7, wobei der Nahrungsmittelriegel eine anfängliche mechanische Härte, wie in der Beschreibung definiert, von 100 bis 750 Pond aufweist.

**12.** Nahrungsmittelriegel nach Anspruch 11, wobei der Nahrungsmittelriegel eine anfängliche mechanische Härte, wie in der Beschreibung definiert, von 100 bis 350 Pond aufweist.

**13.** Nahrungsmittelriegel nach Anspruch 11, wobei der Nahrungsmittelriegel 35 Tage nach der Herstellung des Nahrungsmittelriegels einen Anstieg der mechanischen Härte, wie in der Beschreibung definiert, von weniger als 200 Pond aufweist.

**14.** Nahrungsmittelriegel nach Anspruch 11, wobei der Nahrungsmittelriegel 35 Tage nach der Herstellung des Nahrungsmittelriegels einen Anstieg der mechanischen Härte, wie in der Beschreibung definiert, von weniger als 150 Pond aufweist.

**15.** Nahrungsmittelriegel nach Anspruch 11, wobei der Nahrungsmittelriegel 35 Tage nach der Herstellung des Nahrungsmittelriegels einen Anstieg der mechanischen Härte, wie in der Beschreibung definiert, von weniger als 100 Pond aufweist.

**16.** Nahrungsmittelriegel nach einem der Ansprüche 7 bis 15, wobei mindestens 50% des Strukturproteinmaterials eine Teilchengröße von mindestens 44 $\mu$m aufweisen.

**17.** Verfahren zur Herstellung eines weichen Nahrungsmittelriegels mit langer Haltbarkeit, welches die folgende Schritte umfasst:

(A) Vermischen

(a) eines Strukturproteinmaterials, welches mindestens 90 Gewichts-% Sojaprotein enthält, wobei das Strukturproteinmaterial einen Index an löslichen Feststoffen von 20% bis 40% aufweist, einen TNBS-Wert, der in der Beschreibung definiert ist, von weniger als 35 aufweist und ein Wasserabsorptionsvermögen von 2,7 bis 3,2 Gramm Wasser je Gramm Proteinmaterial bei einem pH-Wert von 5,5 aufweist;
(b) eines Binderproteinmaterials, welches mindestens 90 Gewichts-% Sojaprotein enthält, wobei das Binderproteinmaterial einen Index an löslichen Feststoffen von mindestens 70% aufweist und einen TNBS-Wert, der in der Beschreibung definiert ist, von mindestens 75 aufweist; und
(c) eines Kohlenhydrats, das aus einem verdaubaren Kohlenhydrat, einem unverdaubaren Kohlenhydrat und einem Gemisch derselben ausgewählt ist;

um einen Teig zu bilden, der 20 bis 45 Gewichts-% Protein enthält; und

(B) Walzen und Schneiden des Teigs, um einen Nahrungsmittelriegel zu bilden, welcher eine anfängliche mechanische Härte, wie in der Beschreibung definiert, von weniger als 200 Pond aufweist und in 35 Tagen nach der Herstellung des Riegels einen Anstieg der mechanischen Härte von weniger als 200 Pond aufweist.

**18.** Verfahren nach Anspruch 17, wobei es sich bei dem Strukturproteinmaterial um ein Teilchenmaterial handelt, wobei mindestens 50% der Teilchen des Teilchenmaterials von einem 44μm-Sieb (US-Maschenzahl: 325) aufgehalten werden.

**19.** Verfahren nach Anspruch 17, wobei eine wässrige Schlämme des Binderproteinmaterials eine RVA-Viskosität, wie in der Beschreibung definiert, von weniger als 100 cP bei 25°C aufweist, wobei das Binderproteinmaterial 20 Gewichts-% der Schlämme bildet.

**20.** Verfahren nach einem der Ansprüche 17 bis 19, wobei mindestens 50% des Strukturproteinmaterials eine Teilchengröße von mindestens 44 μm aufweisen.

**Revendications**

**1.** Composition protéinique destinée aux barres de confiserie, comprenant :

(a) une matière protéinique structurale contenant au moins 90 % de protéine de soja en poids, ladite matière protéinique structurale ayant un pourcentage d'extrait sec soluble compris entre 20 % et 40 %, ayant une valeur TNBS, telle que définie dans la description, inférieure à 35 et ayant une capacité d'absorption d'eau de 2,7 à 3,2 grammes d'eau par gramme de matière protéinique à un pH de 5,5 ;
(b) une matière protéinique liante contenant au moins 90% de protéine de soja en poids, ladite matière protéinique liante ayant un pourcentage d'extrait sec soluble d'au moins 70% et une valeur TNBS, telle que définie dans la description, d'au moins 75,

dans laquelle ladite matière protéinique liante est dispersée dans ladite matière protéinique structurale et dans laquelle la composition protéinique contient au moins 5 % de la matière protéinique liante et au moins 5 % de la matière protéinique structurale, en poids, le total de la matière protéinique liante et de la matière protéinique structurale représentant au moins 90 % de la composition protéinique, en poids.

**2.** Composition protéinique selon la revendication 1, dans laquelle ladite matière protéinique structurale est une matière particulaire, dans laquelle au moins 50 % des particules de ladite matière particulaire sont retenus sur une grille de 44 μm (325 mesh) (U.S.).

**3.** Composition protéinique selon la revendication 1, dans laquelle une suspension aqueuse de ladite matière protéinique liante, dans laquelle ladite matière protéinique liante représente 20 % de ladite suspension en poids, présente une viscosité RVA, telle que définie dans la description, inférieure à 100 cps à 25°C,.

**4.** Composition protéinique selon la revendication 1, dans laquelle ladite matière protéinique structurale représente de 20 % à 90 % de ladite composition, en poids, et ladite matière protéinique liante représente de 80 % à 10 % de ladite composition, en poids.

**5.** Composition protéinique selon la revendication 4 essentiellement constituée de ladite matière protéinique structurale et de ladite matière protéinique liante.

**6.** Composition protéinique selon l'une des revendications 1 à 5, dans laquelle au moins 50 % de la matière protéinique structurale a une taille de particules d'au moins 44 μm.

**7.** Barre de confiserie comprenant:

(a) une matière protéinique structurale contenant au moins 90 % de protéine de soja en poids, ladite matière protéinique structurale ayant un pourcentage d'extrait sec soluble compris entre 20 % et 40 %, ayant une valeur TNBS, telle que définie dans la description, inférieure à 35 et ayant une capacité d'absorption d'eau de 2,7 à 3,2 grammes d'eau par gramme de matière protéinique à un pH de 5,5 ;
(b) une matière protéinique liante contenant au moins 90 % de protéine de soja en poids, ladite matière protéinique liante ayant un pourcentage d'extrait sec soluble d'au moins 70 % et une valeur TNBS, telle que définie dans la description, d'au moins 75 ; et
(c) un glucide, choisi parmi un glucide assimilable, un glucide non assimilable, ou un mélange de ceux-ci,

dans laquelle ladite barre de confiserie contient de 20 % à 45 % de protéines, en poids, et dans laquelle la barre de confiserie contient au moins 5 % de la matière protéinique liante, en poids, par rapport aux protéines totales de la barre et au moins 5 % de la matière protéinique structurale, en poids, par rapport aux protéines totales de la barre.

**8.** Barre de confiserie selon la revendication 7, dans laquelle toute la protéine de soja de ladite barre de confiserie est apportée par ladite matière protéinique structurale et ladite matière protéinique liante.

**9.** Barre de confiserie selon la revendication 8, dans laquelle ladite matière protéinique structurale et ladite matière protéinique liante sont présentes dans ladite barre selon un rapport pondéral matière protéinique structurale/matière protéinique liante de 1/4 à 9/1.

**10.** Barre de confiserie selon la revendication 7, dans laquelle ladite matière protéinique structurale et ladite matière protéinique liante sont présentes dans ladite barre selon un rapport pondéral matière protéinique structurale/matière protéinique liante de 1/4 à 9/1.

**11.** Barre de confiserie selon la revendication 7, dans laquelle ladite barre présente une résistance mécanique initiale, telle que définie dans la description, de 100 force g à 750 force g.

**12.** Barre de confiserie selon la revendication 11, dans laquelle ladite barre présente une résistance mécanique initiale, telle que définie dans la description, de 100 force g à 350 force g.

**13.** Barre de confiserie selon la revendication 11, dans laquelle ladite barre présente une augmentation de la résistance mécanique, telle que définie dans la description, inférieure à 200 force g pendant une durée de 35 jours à compter de la préparation de ladite barre.

**14.** Barre de confiserie selon la revendication 11, dans laquelle ladite barre présente une augmentation de la résistance mécanique, telle que définie dans la description, inférieure à 150 force g pendant une durée de 35 jours à compter de la préparation de ladite barre.

**15.** Barre de confiserie selon la revendication 11, dans laquelle ladite barre présente une augmentation de la résistance mécanique, telle que définie dans la description, inférieure à 100 force g pendant une durée de 35 jours à compter de la préparation de ladite barre.

**16.** Barre de confiserie selon l'une des revendications 7 à 15, dans laquelle au moins 50 % de la matière protéinique structurale a une taille de particules d'au moins 44 $\mu$m.

**17.** Procédé de fabrication d'une barre de confiserie molle ayant une longue durée de conservation comprenant :

(A) le mélange de

(a) une matière protéinique structurale contenant au moins 90 % de protéine de soja en poids, ladite matière protéinique structurale ayant un pourcentage d'extrait sec soluble compris entre 20 % et 40 % et ayant une valeur TNBS, telle que définie dans la description, inférieure à 35 et ayant une capacité d'absorption d'eau de 2,7 à 3,2 grammes d'eau par gramme de matière protéinique à un pH de 5,5 ;
(b) une matière protéinique liante contenant au moins 90 % de protéine de soja en poids, ladite matière protéinique liante ayant un pourcentage d'extrait sec soluble d'au moins 70 %, une valeur TNBS, telle que définie dans la description, d'au moins 75 ; et
(c) un glucide, choisi parmi un glucide assimilable, un glucide non assimilable, ou un mélange de ceux-ci ;
pour former une pâte contenant de 20 % à 45 % de protéine, en poids ; et

(B) la mise en feuilles et la découpe de ladite pâte pour former une barre de confiserie ayant une résistance mécanique initiale, telle que définie dans la description, inférieure à 200 force g qui présente une augmentation de la résistance mécanique, telle que définie dans la description, inférieure à 200 force g pendant une durée de 35 jours à compter de la préparation de ladite barre.

**18.** Procédé selon la revendication 17, dans lequel ladite matière protéinique structurale est une matière particulaire où au moins 50 % des particules de ladite matière particulaire, en poids, sont retenus sur une grille de 44 μm (325 mesh) (U.S.).

**19.** Procédé selon la revendication 17, dans lequel une suspension aqueuse de ladite matière protéinique liante, dans laquelle ladite matière protéinique liante représente 20 % de ladite suspension en poids, présente une viscosité RVA, telle que définie dans la description, inférieure à 100 cps à 25°C.

**20.** Procédé selon l'une des revendications 17 à 19, dans lequel au moins 50 % de la matière protéinique structurale a une taille des particules d'au moins 44 μm.

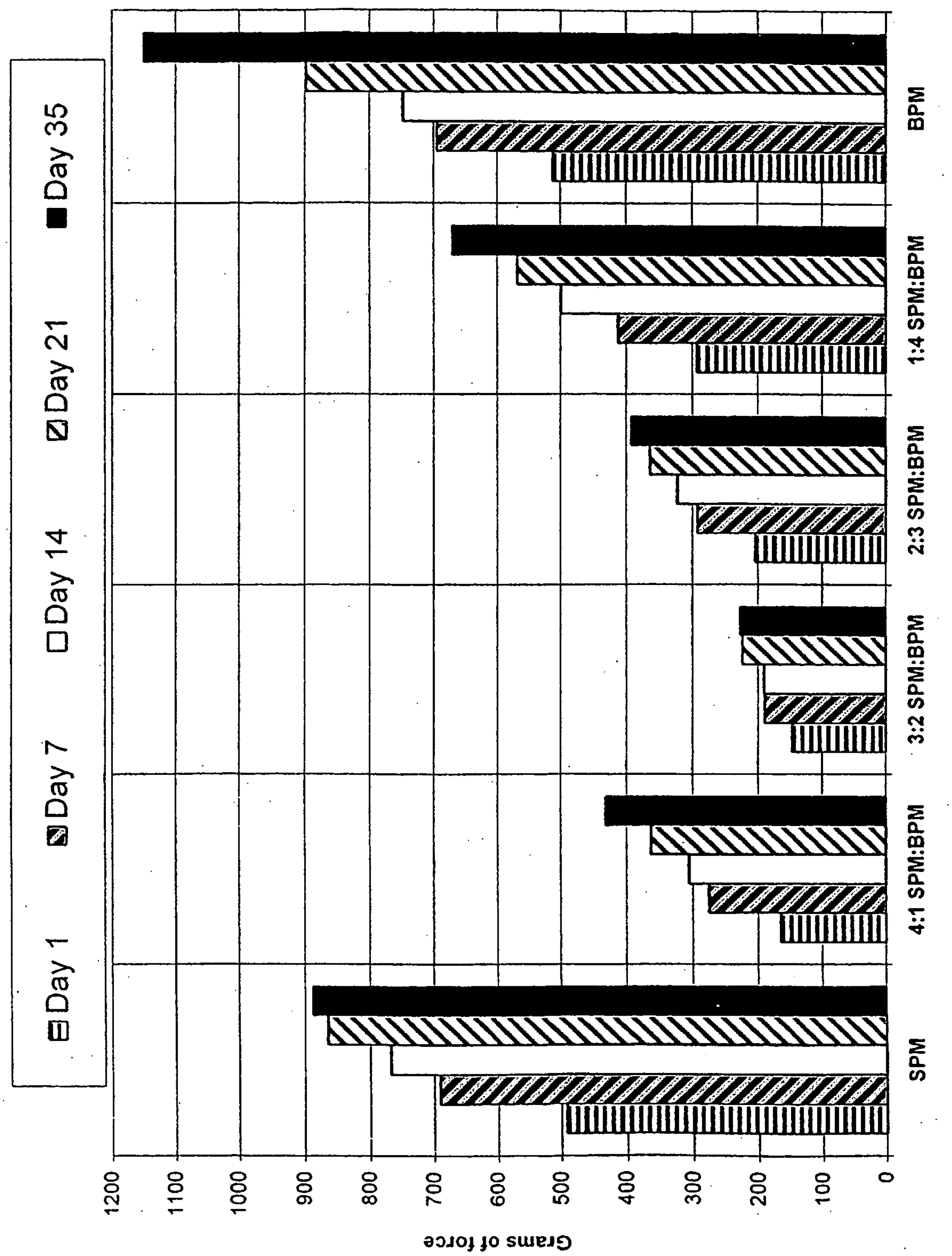
Day 1
Day 7
Day 14
Day 21
Day 35
Grams of force
1200
1100
1000
900
800
700
600
500
400
300
200
100
0
SPM
4:1 SPM:BPM
3:2 SPM:BPM
2:3 SPM:BPM
1:4 SPM:BPM
BPM

Fig. 1

Fig. 2

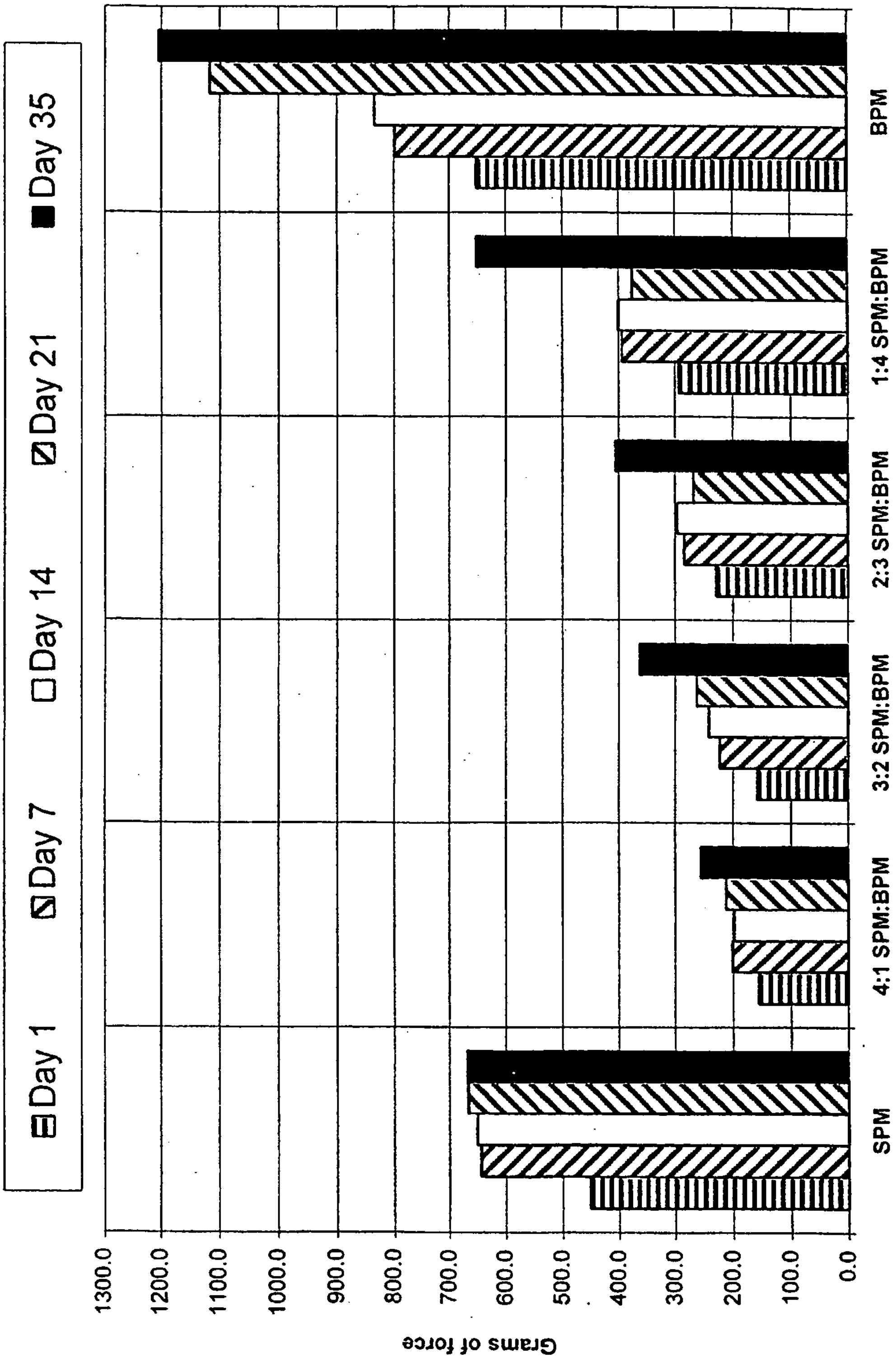
Day 1
Day 7
Day 14
Day 21
Day 35
SPM
4:1 SPM:BPM
3:2 SPM:BPM
2:3 SPM:BPM
1:4 SPM:BPM
BPM
0.0
100.0
200.0
300.0
400.0
500.0
600.0
700.0
800.0
900.0
1000.0
1100.0
1200.0
1300.0
Grams of force

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6299929 B
- US 20030054088 A